# EUROPEAN PATENT SPECIFICATION

(11) **EP 3 693 118 B1**
(45) Date of publication and mention of the grant of the patent: **05.10.2022**
(21) Application number: 20155471.4
(22) Date of filing: 04.02.2020
(51) Int. Cl.: B23K 9/073, B23K 9/173, B23K 9/235, B23K 26/046, B23K 26/342, B23K 26/348, B23K 28/02

(54) **HYBRID ADDITIVE MANUFACTURING SYSTEM USING LASER AND ARC WELDING**
HYBRIDE GENERATIVE FERTIGUNG-SYSTEM UNTER VERWENDUNG VON LASER- UND LICHTBOGENSCHWEISSEN
SYSTÈME DE FABRICATION ADDITIVE HYBRIDE UTILISANT LE SOUDAGE PAR LASER ET À L'ARC

(30) Priority: 05.02.2019 US 201962801467 P; 20.01.2020 US 202016747344
(43) Date of publication of application: 12.08.2020
(73) Proprietor: Illinois Tool Works Inc., Glenview, IL 60025 (US)
(72) Inventor: LIU, Shuang, Glenview, Illinois 60025 (US); WAGNER, Dustin, Glenview, Illinois 60025 (US); MILLER, Erik, Glenview, Illinois 60025 (US)
(74) Representative: HGF

(56) References cited:
- CN-A- 103 056 533
- CN-A- 107 262 878
- US-A1- 2013 105 450
- US-A1- 2014 027 415
- US-A1- 2017 145 586

## Description

### BACKGROUND

The present disclosure relates to a hybrid additive manufacturing system.

Additive manufacturing is a process that deposits material in a layered fashion to build up a part into a particular geometry. Conventional systems that employ metal welding techniques to create additive manufactured products (i.e. three-dimensional or 3D printing) must use high currents to generate an arc sufficient to form and deposit a metal droplet, consistent with gas metal arc welding (GMAW) techniques. The resulting droplets transfer a high amount of heat to the layers below, which can cause deformation of the part, such as sagging. Some conventional arc welding is restricted by relatively low weld speed in order to achieve the stable arc. Also, for some materials such as titanium, the arc is erratic, resulting in winding weld beads and excessive spatter. Further, the droplets are often large, making fine detail near impossible, especially in view of the high heat required to generate an arc in conventional welding systems. Thus, there is a need for improved additive manufacturing systems and techniques that allow for more stable arc formation, fine control of metal deposition and part formation.

US-2013/105450-A1 (basis for the preamble of claim 1) discloses a method and an apparatus for the production of a welding seam or a three-dimensional structure on a surface of a metallic work piece with the help of a welding torch for carrying out a welding process with a welding wire guided in a welding torch, whereby an electric arc is ignited between the welding wire and the work piece, and for stabilising the electric arc a laser for emitting a laser beam.

US-2014/027415-A1 discloses an adaptive control hybrid welding system including hybrid welding apparatus, control system connected to hybrid welding apparatus, and seam tracker connected to control system.

### SUMMARY

A hybrid additive manufacturing system according to the present invention is defined in claim 1. Further embodiments of the present invention are defined in the dependent claims 2 to 18.

The present disclosure relates generally to additive manufacturing systems. In particular, a hybrid laser and arc welding system is configured to perform additive manufacturing by application of lasing power to a substrate to heat a weld puddle, and adding material to the weld puddle via an electrode wire to create a multilayer part comprised of the electrode wire. More particularly, provision of a laser introduces heat to the weld puddle, thereby enhancing stability of an arc for application of the electrode wire.

As a result, the hybrid additive manufacturing system disclosed herein provides a more stable, more economical metallic deposition technique, providing finer control for a more detailed layered part.

### DRAWINGS

FIG. 1 illustrates a hybrid additive manufacturing system to create a multilayer part, in accordance with aspects of this disclosure.
FIGS. 2 and 3 illustrate example hybrid additive manufacturing systems to create a multilayer part, in accordance with aspects of this disclosure.
FIGS. 4A and 4B illustrate an example cathode spot at a weld puddle.
FIG. 5 illustrates example waveforms and an example weld bead corresponding to the example weld process illustrated in FIGS. 4A and 4B.
FIGS. 6A and 6B illustrate an example cathode spot at a weld puddle.
FIG. 7 illustrates example waveforms and an example weld bead corresponding to the example weld process illustrated in FIGS. 6A and 6B.
FIGS. 8A through 8C illustrate an example progression of a cathode spot along a weld puddle, in accordance with aspects of this disclosure.
FIG. 9 illustrates an example weld bead corresponding to the example weld process illustrated in FIGS. 8A through 8C.
FIG. 10 illustrates an example cathode spot at a weld puddle, in accordance with aspects of this disclosure.
FIG. 11 is a graphical representation of example control circuit components for a hybrid additive manufacturing system of the type shown in FIGS. 1-10, in accordance with aspects of this disclosure.

The figures are not necessarily to scale. Where appropriate, similar or identical reference numbers are used to refer to similar or identical components.

### DETAILED DESCRIPTION

The present disclosure describes systems and methods for forming a multilayered part by additive manufacturing techniques. In particular, a hybrid additive manufacturing system employs a laser system to generate a laser beam focused on a weld puddle, and an arc welding process to provide a material to build up the part by application of a plurality of droplets into a series of layers.

Additive manufacturing can describe a variety of processes in which material is joined or solidified via one or more formation technologies to create a three-dimensional object, with material being added together, such as in a layered fashion. For example, three-dimensional (3D) printing is used in both rapid prototyping and additive manufacturing using technologies such as stereolithography (STL) or fused deposit modeling (FDM).

Through additive manufacturing techniques, objects of almost any shape or geometry can be created, typically by use of a digital three-dimensional model. Traditional techniques for creating an object like injection molding can be less expensive for manufacture of some products in high quantities. By contrast, additive manufacturing may be faster, more flexible and/or less expensive when producing fewer parts. Thus, additive manufacturing systems give designers and manufacturers the ability to produce parts and concept models in less time with greater flexibility. Thus, unlike material removed from stock in conventional machining processes, additive manufacturing builds a three-dimensional object from a computer-aided design (CAD) model or Additive Manufacturing File Format (AMF) file, usually by successively adding material (e.g., an electrode wire) layer by layer.

Metal additive manufacturing (AM) or metal 3D printing is a process of making 3D solid metallic objects from a digital model. Aerospace, automotive, and medical industries are the leading players. Metal AM generally save time, reduce cost and improve the product performance compared against conventional systems. Metal 3D printing, for example, can be categorized into powder-bed fusion (PBF) and direct metal deposition (DMD).

PBF can produce parts with relatively high resolution and complex shapes. However, deposition rates for PBF is extremely low, on the order of 0.2 kg/hour (i.e. 0.44 lbs/hour). Further, the part size of a PBF process is limited by the size of the powder-bed chamber.

DMD can produce large structures/parts, but with relatively low resolution and simple shape when compared against PBF processes. The deposition rate for a DMD process may be on the order of 15 kg/hour (i.e. 33 lbs/hour). A DMD process can initiate part formation any shape or portion of an underlying substrate, and build in free space with or without the need for structural support. In a DMD process, filling materials such as powder and/or wire can be used to form the part.

In conventional systems, powder-fed has gained widest adoption in DMD fabrication due to the range of available powdered materials, as well as the ability to accurately control the system to create parts with complex and/or specific geometries. However, DMD formation processes come with several disadvantages, such as susceptibility of the stock material to suffer from impurities, low material utilization efficiency, and pollution in the work environment caused by floating particles created during application. In some examples, unmelted particles may stick to the weld bead surface, which may result in deformities, cause local corrosion, or other undesirable effects.

As an alternative to the DMD fabrication process, material can be wire-fed in a manner similar to an arc welding process. Wire fed fabrication is characterized by near complete material utilization and a relatively high deposition rate. Advantageously, wire for such a process has a lower costs relative to powder and has fewer challenges maintaining wire as a stocked material. However, as stated herein, wire may offer fewer material choices. Further, smoothness and/or consistency of a bead made by a wire-fed process is typically superior to that of a powder-fed process, but variations of the side surface (e.g., waviness) may be more pronounced.

In an example, manufacturers in the aerospace industry have employed 3D printing technology in large structural parts in the hope of reducing raw material costs, reduce the cost and time devoted to the machining process, and/or shorten the lead time from a part request to delivery.

A variety of materials have been explored that provide advantages in aerospace and other industries to suit the particularly challenging conditions and/or environment in which they operate. In an example, Titanium has been widely adopted in the aerospace industry as it features low density, high strength and improved corrosion resistance. However, the use of Titanium provides various challenges. For example, the raw Titanium billet price can exceed $30/lb. By comparison, the cost of scrap Titanium (e.g., discarded from a machining process) is only a fraction of the purchase price for raw Titanium. Additionally, Titanium is costly to machine due to slow metal removal rates and short machine tool life. Manufacture of Titanium forging dies can have lead times in excess of a year. Further, forging designs are typically worst-case material thickness (e.g., may not be optimized for a particular purpose) due to the long design cycle.

As a result of these and other challenges, the "buy-to-fly" ratio (e.g., acquisition cost to material employed in a useful part) is relatively high, typically over 10:1 and sometimes as high as 50:1 or 60:1 for certain parts. In the case of forging, buy-to-fly ratios are still typically over 7:1, as cost of the raw material is high, and the associated forging dies are expensive and require a long-lead-time.

For some example products, the building envelop many aerospace subcontractors are interested in is on the order of 0.5 m × 2.5 m × 0.3 m. For these and similar size demands, wire-fed DMD is an attractive option. For example, for wire-fed DMD, the heat source can come from a variety of sources (e.g., electron beam, laser, arc, etc.), which allows for greater control of the deposition process and generates desirable results (e.g., finer detail, faster deposition rates, less distortion, etc.) in comparison to other techniques.

Conventional systems that employ metal welding techniques to create additive manufactured products (i.e. 3D printing) must use high currents to generate an arc sufficient to form and deposit a droplet, consistent with typical arc welding techniques. The result is droplets that transfer a high amount of heat to the layers below, which can cause deformation such as sagging. Further, the droplets are often large, making fine detail near impossible, especially in view of the high heat required to generate an arc in conventional welding systems. In some examples, the arc welding techniques employed can be gas metal arc welding (GMAW) techniques, gas tungsten arc welding (GTAW), pulsed-GMAW (P-GMAW), plasma arc welding (PAW), to name but a few.

By contrast, the disclosed hybrid additive manufacturing systems and processes provide fine control of generated heat and deposition rates. Thus, a greater range of materials can be employed, such as titanium, copper, metal alloys, etc., as well as thinner gauge wires, and/or wires with a variety of melting temperatures, in comparison to conventional systems. The result is dynamic application of the metallic wire based on input from one or more sensors, operational characteristics, and/or models, thereby allowing for higher deposition rates with less spatter and deformation versus additive manufacturing products created through conventional systems.

As described more completely with respect to the several figures, a hybrid additive manufacturing system includes a laser system and an additive manufacturing tool, such as an arc welding type torch. The tool is configured to receive a metallic electrode wire, which is heated by a power supply to create droplets for deposition to create the part by building up successive layers of metal. The additive manufacturing system operates through coordination of the laser system to generate a laser beam, which is applied to a weld bead, and an arc welding process, which provides material for the part.

In arc welding processes, a threshold value of laser intensity and/or power can be applied to the weld puddle to stabilize the arc. Adding a low power laser (e.g., less than 1000 Watts) may be enough to stabilize the arc. Thus, the capital cost of hybrid laser arc welding solution can be much less than pure laser welding solution.

Through the laser beam, the arc cone position can be manipulated so that the energy into the molten pool can be redistributed. More energy can go to the side of the weld and less energy can be concentrated at the center. By moving the laser beam at a representative oscillation frequency (e.g., about 25 Hz), the arc formation is further stabilized.

For example, the focal point of the laser beam is targeted at the weld puddle near a front edge of where a tip of the electrode wire makes contact with the substrate. For example, the laser irradiation spot locks the cathode position in the molten pool, thereby stabilizing the arc. As disclosed herein, within this effective zone, the laser beam can manipulate the arc cathode position to regulate heat input, stabilize the arc, and control weld bead formation. In welding Titanium, for example, the addition of laser energy serves to promote arc formation and/or control motion of the cathode spot within the weld pool. Therefore, a hybrid laser and arc welding process provides a potential solution for Titanium additive manufacturing.

Accordingly, a peak and a background voltage profile of the hybrid additive manufacturing process is more stable than what is achieved with just an arc welding process. As a result, the weld bead is straighter, and the process creates less spatter. Additionally or alternatively, the average voltage required to generate an arc hybrid laser GMAW is less than a conventional GMAW process.

In disclosed examples, a hybrid additive manufacturing system includes an arc welding tool configured to receive a wire electrode and to apply a plurality of droplets of the wire electrode to a part comprising a plurality of layers, each layer comprising one or more droplets to build up the part, a laser system to generate a laser beam and control a lens to focus the laser beam on a focal point over a substrate during a hybrid additive manufacturing operation or welding operation to stabilize an arc from the arc welding tool. A controller is configured to regulate power to at least one of the arc welding tool or the laser system.

The controller is further configured to command an adjustment of one of a position or orientation of one or more of the laser system or the arc welding tool to maintain a threshold distance between the focal point and the wire electrode at the weld puddle.

In some examples, a material of the wire electrode comprises one or more of Titanium, copper, magnesium, or an alloy of one or more of the materials. In examples, the focal point corresponds to a laser irradiation spot to lock the cathode position in the weld bead, thereby stabilizing the arc.

In some examples, the threshold distance between the focal point and the wire electrode is between 1 and 3 mm. In examples, the laser beam is generated with a lasing power of less than 1000 Watts. In some examples, the laser system is to adjust at least one of a lasing power level or an oscillation speed of the laser system.

In examples, the laser system further comprises a lens to focus the laser beam to a focal point on a weld puddle to generate heat to facilitate melting of the wire electrode as it enters the weld puddle. In some examples, the controller is further configured to adjust a location of the focal point based on a determined distance from a reference point or feedback data indicating a position of the wire electrode relative to the focal point on the welding puddle.

In examples, the laser system is configured to scan the laser beam about the focal point as a hollow shaped beam. In some examples, the laser system is configured to scan the laser beam in a continuous pattern. In examples, the controller is configured to adjust at least one of a lasing power level, a spot size of the lasing power, or a shape of the laser beam to adjust a power profile of the laser power at the focal point.

In some examples, a sensor including one or more of an optical sensor, a laser scanner, an infrared sensor, an ultrasound sensor, a mechanical sensor, or a thermal sensor to collect information from one or more characteristics of the laser system or the arc welding system.

In examples, the movement of the focal point and relative movement between the weld puddle and the laser system cause the laser beam to trace a superimposed pattern on the weld puddle. In examples, the superimposed pattern is one of a circle, an ellipse, a zigzag, a figure-8, a crescent, a triangle, a square, a rectangle, a non-linear pattern, an asymmetrical pattern, a pause, or any combination thereof. In some examples, a wire feeder is configured to move the wire to or away from the weld puddle.

In examples, the arc welding process comprises one of gas metal arc welding (GMAW), gas tungsten arc welding (GTAW), pulsed-GMAW (P-GMAW), or plasma arc welding (PAW).

In disclosed examples, a hybrid additive manufacturing system includes an arc welding tool configured to receive a wire electrode and to apply a plurality of droplets of the wire electrode to form a weld bead to create a part comprising a plurality of layers, each layer comprising one or more droplets to build up the part; a laser system to focus a laser beam on a focal point over a substrate during a hybrid additive manufacturing operation or welding operation; and a controller configured to command an adjustment of one of a position or orientation of one or more of the laser system or the arc welding tool to stabilize the arc from the arc welding tool at the focal point in the weld bead based on information from the sensor.

In some examples, the position or orientation of one or more of the laser system or the arc welding tool to control an arc cathode position in the weld bead. In examples, the controller is configured to adjust at least one of a lasing power level, a spot size of the lasing power, or a shape of the laser beam to adjust a power profile of the laser power at the focal point.

In some examples, a sensor to collect information from one or more characteristics of the laser system or the arc welding system, wherein the sensor includes one or more of an optical sensor, a laser scanner, an infrared sensor, an ultrasound sensor, a mechanical sensor, or a thermal sensor.

As used herein, the term "additive manufacturing", as used herein, is a manufacturing process in which material is joined or solidified under computer control to create a three-dimensional object, with material being added together in a layered fashion.

As used herein, the term "welding-type power" refers to power suitable for welding, plasma cutting, induction heating, CAC-A and/or hot wire welding/preheating (including laser welding and laser cladding). As used herein, the term "welding-type power supply" and/or "power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, a "circuit" or "circuitry" includes any analog and/or digital components, power and/or control elements, such as a microprocessor, digital signal processor (DSP), software, and the like, discrete and/or integrated components, or portions and/or combinations thereof.

As used herein, the term "pulsed welding" or "pulsed MIG welding" refers to techniques in which a pulsed power waveform is generated, such as to control deposition of droplets of metal into the progressing weld puddle.

As used herein, the term "boost converter" is a converter used in a circuit that boosts a voltage. For example, a boost converter can be a type of step-up converter, such as a DC-to-DC power converter that steps up voltage while stepping down current from its input (e.g., from the starter battery) to its output (e.g., a load and/or attached power bus). It is a type of switched mode power supply.

As used herein, the term "buck converter" (e.g., a step-down converter) refers to a power converter which steps down voltage (e.g., while stepping up current) from its input to its output.

As used herein, the term "memory" includes volatile and non-volatile memory, and can be arrays, databases, lists, etc.

As used herein, the term "torch," "tool" or "welding-type tool" can include a hand-held or robotic welding torch, gun, or other device used to create the welding arc.

As used herein, the term "buffer", as used herein, includes components used to take up the wire when the wire direction is reversed and provide wire when the wire is advanced.

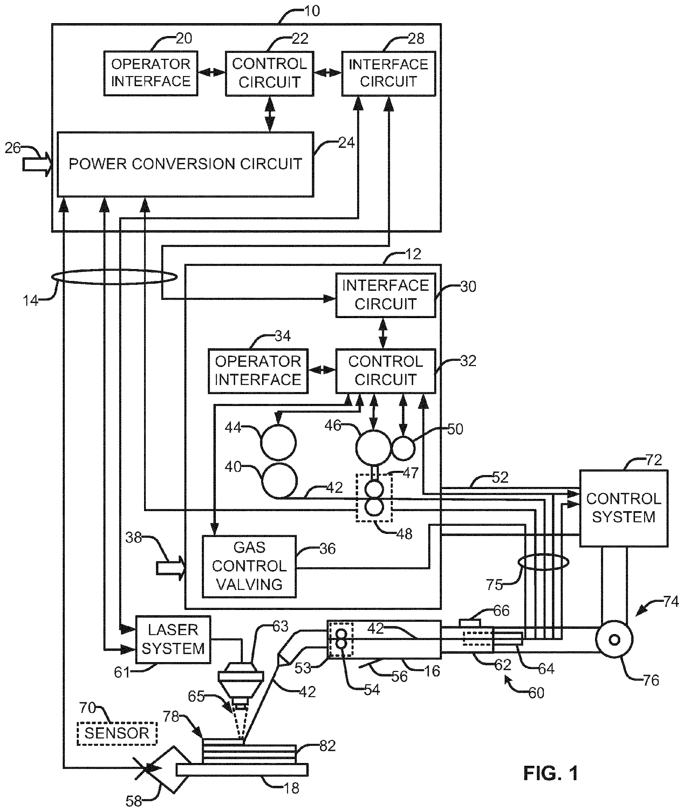

FIG. 1 illustrates an example arc welding system for performing hybrid additive manufacturing techniques. As shown in FIG. 1, a power supply 10 and a wire feeder 12 are coupled via conductors or conduits 14. In the illustrated example, the power supply 10 is separate from the wire feeder 12, such that the wire feeder may be positioned at some distance from the power supply near a welding location. However, in some examples, the wire feeder may be integrated with the power supply 10. In such cases, the conduits 14 would be internal to the system. In examples in which the wire feeder 12 is separate from the power supply 10, terminals are typically provided on the power supply and on the wire feeder 12 to allow the conductors or conduits to be coupled to the systems so as to allow for power and gas to be provided to the wire feeder 12 from the power supply 10, and to allow data to be exchanged between the two devices.

The system is configured to provide wire, power and shielding gas to an additive manufacturing tool or welding torch 16. The tool 16 may be of many different types, and may allow for the feed of a welding wire 42 (e.g., an electrode wire) and gas to a location adjacent to a substrate or platform 18 upon which a part 78 that includes layers 82 is to be formed by application of metal droplets from the advancing wire 42. A second conductor is run to the welding workpiece so as to complete an electrical circuit between the power supply and the workpiece.

The welding system is configured for data settings to be selected by the operator and/or a welding sequence, such as via an operator interface 20 provided on the power supply 10. The operator interface 20 will typically be incorporated into a front faceplate of the power supply 10, and may allow for selection of settings such as the welding process, the type of wire to be used, voltage and current settings, and so forth. In particular, the system is configured to allow for welding with various steels, aluminums, or other welding wire that is channeled through the tool 16. Further, the system is configured to employ welding wires with a variety of cross-sectional geometries (e.g., circular, substantially flat, triangular, etc.). These weld settings are communicated to a control circuit 22 within the power supply. The system may be particularly adapted to implement welding regimes configured for certain electrode types.

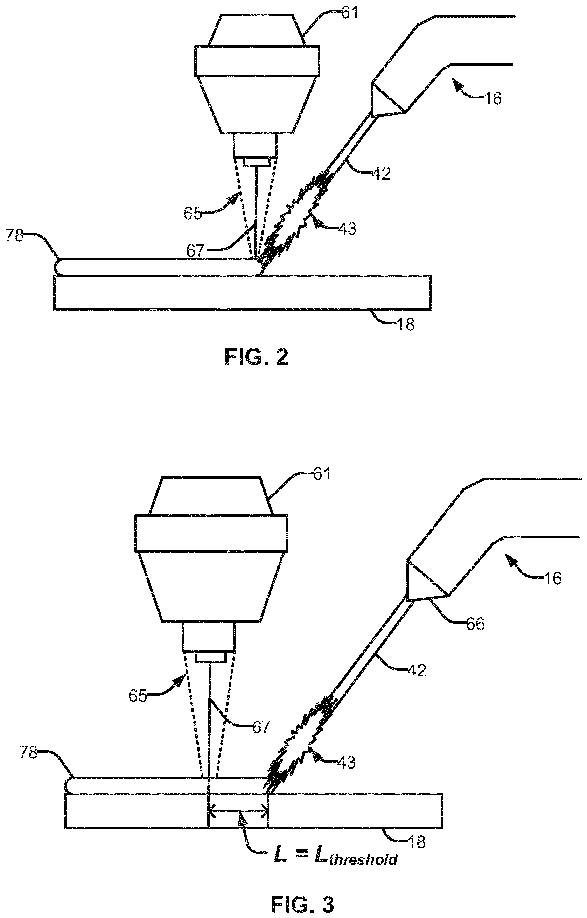

Additionally or alternatively, process instructions for additive manufacturing can be provided via a weld sequence program, such as stored on a memory accessible to a processor/control circuit 22 associated with the power supply 10. In such a case, the sequencer can employ stored information (e.g., associated with a desired product configuration and/or process, including historical data), and/or customizable by a user. For instance, information associated with a particular design (e.g., one or more three-dimensional models and/or thermal profiles associated with the part 78, material characteristics, system control parameters, etc.) corresponding to the part 78 can be stored in a memory and/or provided via a network interface, as described in greater detail with respect to FIG. 2. Thus, the information can be used to control operation of the system to facilitate formation of the part 78, such as by controlling a power output from the power supply 10, wire feeder motors 48, 54, robotic system 72, etc.

The control circuit 22, described in greater detail below, operates to control generation of welding power output that is supplied to the welding wire 42 for carrying out the desired additive manufacturing operation. In examples, the control circuit 22 may be adapted to regulate a pulsed MIG welding regime that promotes short circuit transfer of molten metal to the substrate 18 in order to build up multiple layers 82 of the part 78, without adding excessive energy to the part 78 or the welding wire 42. In "short circuit" modes, droplets of molten material form on the welding wire 42 under the influence of heating by the welding arc, and these are periodically transferred to the part 78 by contact or short circuits between the welding wire 42 and droplets from the advancing wire 42 and the layers 82.

In this manner, the system and/or the control circuit 22 controls formation of the part 78 by adjusting one or more operational characteristics of the system during the additive manufacturing process. The operational characteristics may include, but are not limited to, wire feeder speed, wire feeder direction, travel speed, power output, process mode, deposition path, deposition sequence, torch angle, etc.

Additionally, a sensor(s) 70 can measure operational parameters associated with operation of the system (e.g., current, voltage, inductance, phase, power, inductance, speed, acceleration, orientation, position, etc.). The sensed operational characteristic (e.g., voltage, current, temperature, shape, speed, etc.) can be provided to the control circuit 22 or other controller (e.g., control circuit 32, a controller associated with the robotic system 72, etc.) to further control the additive manufacturing process.

Power from the power supply is applied to the wire electrode 42, typically by a welding cable 52. Similarly, shielding gas is fed through the wire feeder and the welding cable 52. During welding operations, the welding wire 42 is advanced through a jacket of the welding cable 52 towards the tool 16. Within the tool 16, a second wire feeder motor 53 comprises rollers 54 may be provided with an associated drive roller, which can be regulated to provide the desired wire feed speed and/or direction.

A robotic system 72 can be employed to regulate movement and position of the tool 16 in accordance with the control circuits 22, 32, as well as information from sensor(s) 70, for example. In examples, the robotic system 72 may be in communication with the power supply 10, the wire feeder 12 and/or the tool 16 via one or more cables 75. Thus, power and/or information can be provided and/or exchanged via cable 75 to control the additive manufacturing process. In particular, the robotic system 72 can employ one or more arms 74 having one or more actuators 76 (e.g., servo motors, joints, etc.). In this way, the robotic system 72 can command fine control of the attached tool 16 in six degrees of freedom during the welding operation, including travel speed, tool location, distance from the part 78, etc. The robotic system 72 may include one or more sensors to sense operational characteristics, which can be communicated with the control circuits 22, 32 to further facilitate formation of the part 78.

In some examples, the control circuits 22, 32 may provide a signal to the wire feeder 12, the power supply 10, and or the robotic system 72 to enable the additive manufacturing process to be started and stopped in accordance with a particular part design. That is, upon initiation of the process, gas flow may begin, wire may advance, and power may be applied to the welding cable 52 and through the tool 16 to the advancing welding wire 42. A workpiece cable and clamp 58 allow for closing an electrical circuit from the power supply through the welding torch, the electrode (wire), and the part 78 for maintaining the welding arc during the operation.

The present arc welding system allows for control of successive voltage and/or current levels and/or pulse durations based on previous current and duration measurements so as to control the promotion, occurrence, duration, and interruption of short circuit events between the welding wire electrode and the advancing weld puddle. In particular, current peaks in waveforms are regulated based on one or more preceding short circuit events, or aspects of the short circuit events, such as its duration.

The control circuit 22 is coupled to power conversion circuit 24. This power conversion circuit 24 is adapted to create the output power, such as pulsed waveforms applied to the welding wire 42 at the tool 16. Various power conversion circuits may be employed, including choppers, boost circuitry, buck circuitry, inverters, converters, and so forth. The configuration of such circuitry may be of types generally known in the art in and of itself. The power conversion circuit 24 is coupled to a source of electrical power as indicated by arrow 26. The power applied to the power conversion circuit 24 may originate in the power grid, although other sources of power may also be used, such as power generated by an engine-driven generator, batteries, fuel cells or other alternative sources. The power supply illustrated in FIG. 1 may also include an interface circuit 28 configured to allow the control circuit 22 to exchange signals with the wire feeder 12.

The wire feeder 12 includes a complementary interface circuit 30 that is coupled to the interface circuit 28. In some examples, multi-pin interfaces may be provided on both components and a multi-conductor cable run between the interface circuit to allow for such information as wire feed speeds, processes, selected currents, voltages or power levels, and so forth to be set on either the power supply 10, the wire feeder 12, or both.

The wire feeder 12 also includes control circuit 32 coupled to the interface circuit 30. As described below, the control circuit 32 allows for wire feed speeds to be controlled in accordance with operator selections or stored sequence instructions, and permits these settings to be fed back to the power supply via the interface circuit. The control circuit 32 is coupled to an operator interface 34 on the wire feeder that allows selection of one or more welding parameters, particularly wire feed speed. The operator interface may also allow for selection of such weld parameters as the process, the type of wire utilized, current, voltage or power settings, and so forth. The control circuit 32 may also be coupled to gas control valving 36 which regulates the flow of shielding gas to the torch. In general, such gas is provided at the time of welding, and may be turned on immediately preceding the weld and for a short time following the weld. The gas applied to the gas control valving 36 may be provided in the form of pressurized bottles, as represented by reference numeral 38.

The wire feeder 12 includes components for feeding wire to the welding tool 16 and thereby to the welding application, under the control of control circuit 32. For example, one or more spools of welding wire 40 are housed in the wire feeder. Welding wire 42 is unspooled from the spools and is progressively fed to the tool 16. The spool may be associated with a clutch 44 that disengages the spool when wire is to be fed to the tool. The clutch 44 may also be regulated to maintain a minimum friction level to avoid free spinning of the spool 40. The first wire feeder motor 46 may be provided within a housing 48 that engages with wire feed rollers 47 to push wire from the wire feeder 12 towards the tool 16.

In the example of FIG. 1, a moveable buffer 60 can include a first portion 62 and a second portion 64, where at least one of the first and second portions are configured to move relative the other portion in response to a change in the amount of welding wire 42 between a first wire feeder motor 46 and a second wire feeder motor 53. A sensor 66 (e.g., one or more sensors) is configured to sense relative movement or displacement between the first and second portions and provide sensor data to control circuit (e.g., control circuit 22, 32) to adjust a speed and/or direction of the welding wire 42 in response.

In practice, at least one of the rollers 47 is mechanically coupled to the motor and is rotated by the motor to drive the wire from the wire feeder, while the mating roller is biased towards the wire to maintain good contact between the two rollers and the wire. Some systems may include multiple rollers of this type. A tachometer 50 or other sensor may be provided for detecting the speed of the first wire feeder motor 46, the rollers 47, or any other associated component so as to provide an indication of the actual wire feed speed. Signals from the tachometer are fed back to the control circuit 32, such as for continued or periodic monitoring, calibration, etc. In some examples, the system includes a wire spool motor for rotating the wire feeding device, which can be similarly adjusted to increase or decrease the amount of wire between wire feeder motors.

In some examples, the wire feeder 12 can be configured to reverse the direction of the welding wire 42. Moreover, although described as operating with two wire feeders and/or wire feeder motors (e.g., wire feeder motors 46 and 53), the system can operate with a single wire feeding unit to advance and/or reverse wire during formation of the part. Additionally or alternatively, in some examples, one wire feeder may be configured to advance the wire while another wire feeder is configured to reverse the direction of the wire. In this example, one or more control circuit (e.g., control circuits 22, 32) coordinates operation of the two wire feeders to implement a CSC welding process in an additive manufacturing system, as disclosed herein.

Other system arrangements and input schemes may also be implemented. For example, the welding wire may be fed from a bulk storage container (e.g., a drum) or from one or more spools outside of the wire feeder. Similarly, the wire may be fed from a "spool gun," in which the spool is mounted on or near the welding torch. As noted herein, the wire feed speed settings may be input via the operator input 34 on the wire feeder or on the operator interface 20 of the power supply, or both. In systems having wire feed speed adjustments on the welding torch, this may be the input used for the setting.

Although described with respect to an arc welding-type system, the disclosed system may be implemented in conjunction with a variety of technologies to conduct additive manufacturing processes. In but one example, additive manufacturing may employ a laser to add heat to facilitate melting of a material (e.g., electrode wire 42) in the weld puddle to build up a layered part as disclosed with respect to the systems and methods provided herein. As shown, a laser system 61 is provided, connected to the power supply 10 to supply power from the power conversion circuit 24 and send and receive information to and from the control circuit 22. The laser system 61 controls a laser generator 63 to generate a laser beam 65 for application to one or more layers 82 of the part 78. The laser system 61 is configured to cooperate with the welding tool 16 to and control system 72 to ensure a desired stability is present in an arc, for example, in a GMAW process using a Titanium wire.

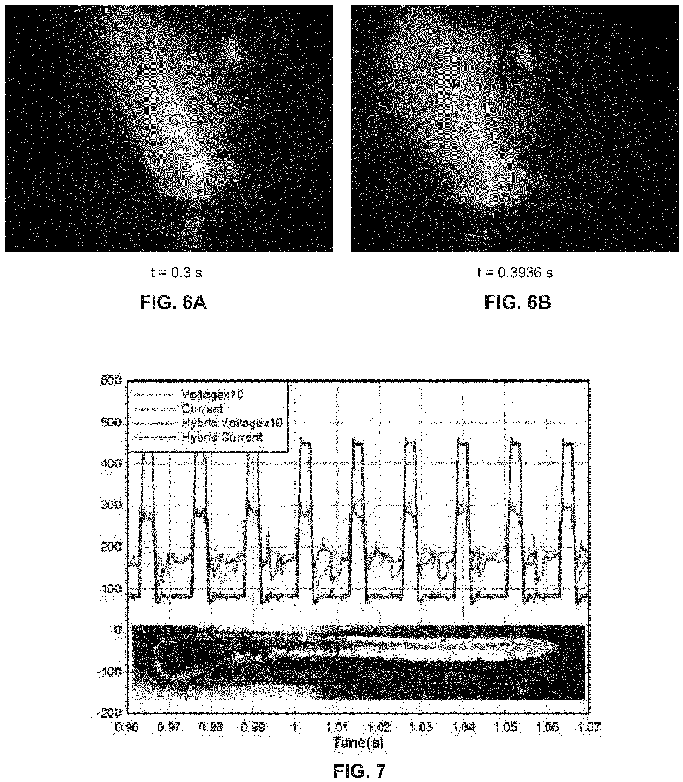

In the example of FIGS. 2 and 3, the laser beam 65 is focused on the part 78 (e.g., on a weld puddle formed on and/or of the part) in order to enhance arc stability of an arc 43. As illustrated in FIGS. 6 through 10, the application of the laser beam 65 stabilizes the arc 43 by guiding the cathode spot associated with the arc welding on the weld puddle surface. The result is a controlled heat profile at the weld puddle, while requiring a lower amount of both lasing power and arc welding power. The benefits of such low power techniques are realized in the increased control and deposition rate, in particular during an additive manufacturing process that employs Titanium, but also copper, alloys, and other metallic materials.

Although a single laser system generating a single laser beam is described with respect to FIGS. 2 and 3, the laser system 61 may be configured to generate two or more laser beams, which may be directed to different locations on the part 78 (simultaneously or at varying times) to further control weld bead formation. Additionally or alternatively, two or more laser systems may be used, each laser system configured to generate one or more laser beams for controlling weld beam formation. As shown in FIG. 3, the distance L between central axis 67 of the oscillating laser beam 65 to the front tip of the electrode wire (as arc 43 forms between the weld puddle/part 78 and electrode wire 42) changes from about 0 mm to about 2 mm. As disclosed herein, within this effective zone, the laser beam can manipulate the arc cathode position to regulate heat input, stabilize the arc, and control weld bead formation.

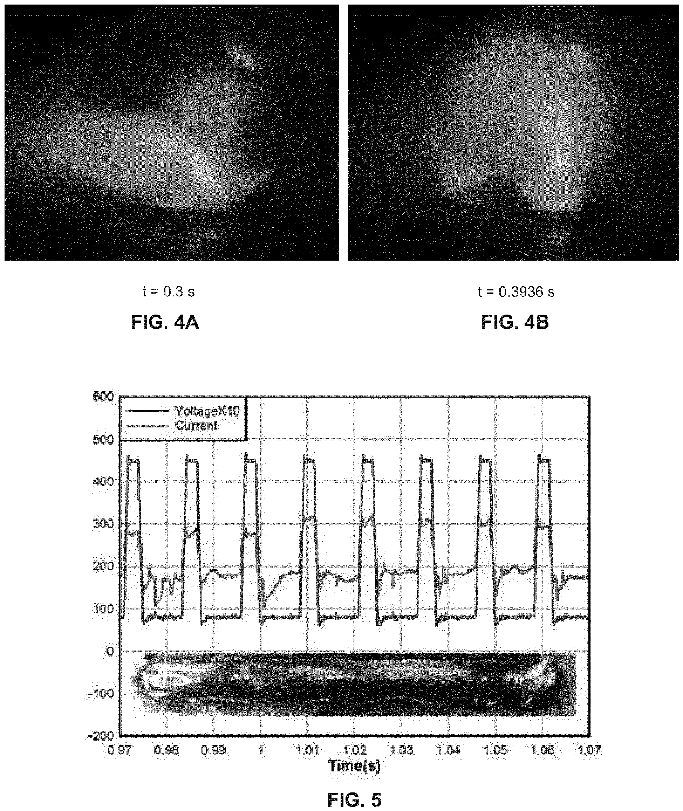

In some examples, arc welding is a common and relatively affordable technique employed in joining Titanium. However, a Titanium based arc welding process can be limited by relatively low welding speeds and/or low deposition rate. Although some available techniques (including arc welding) provide faster welding and/or higher deposition rate, the arc used during Titanium deposition can be unstable and/or create excessive spatter. In the example of FIGS. 4A and 4B, FIG. 4A shows that at time 0.3 s, the cathode is near the front of the puddle, while at time 0.3936 s, the cathode moves to the middle of the puddle and the cathode in the front is diminishing. The erratic movement of the cathode in the welding puddle makes regulation of the voltage difficult, for example, at the background of the pulse. This can generate a winding bead, as shown in FIG. 5. Such erratic movement of cathode in the molten pool may also affect the detachment of the droplet, causing spatter.

Hybrid deposition techniques that employ laser and arc welding have been employed in welding applications for addressing these and other issues, while providing increased welding speeds and/or deeper weld penetration. In welding Titanium, the addition of laser energy serves to promote arc formation and/or control motion of the cathode spot within the weld pool. Therefore, a hybrid laser and arc welding process provides a potential solution for Titanium additive manufacturing.

In arc welding processes, a threshold value of laser intensity and/or power can be applied to the weld puddle to stabilize the arc. For instance, the bigger the beam size, the higher the needed laser power for the desired effect. For example, a beam size of about 0.6 mm with an applied laser power of about 200 Watts may serve to stabilize the arc for low power arc welding processes using titanium or other materials. In some examples, a beam size of about 0.6 mm with a lasing power of about 1000 W provides similar stabilizing results. Further, the focal point of the laser beam is targeted at the weld puddle near a front edge of where a tip of the electrode wire makes contact with the substrate. For example, and as is shown in FIGS. 6A and 6B, the laser irradiation spot locks the cathode position in the molten pool, thereby stabilizing the arc.

FIG. 7 shows the current and voltage profile without and with turning the laser on and the bead appearance of a Titanium weld bead made by a hybrid laser-arc welding process. FIG. 7 shows the effects of turning the laser on, such that a peak and a background voltage profile of the hybrid process is more stable than just an arc welding process. As shown in FIG. 7, the bead is straighter (in comparison to the bead of FIG. 5), and the process creates less spatter. Additionally or alternatively, the average voltage required to generate an arc hybrid laser GMAW is less than a conventional GMAW process. This reduction in applied voltage stems from the ability of the hybrid laser GMAW system to generate a more regular plasma column length due to the consistent cathode spot location determined by the laser.

According to the present invention, additionally or alternatively, an oscillating laser beam controls the cathode spot on the molten pool. For example, the distance between the laser beam and the location of the electrode wire at the weld puddle can be selected for improved arc stability. In examples, the laser beam oscillates at a frequency of about 25 Hz, with a diameter of about 3 mm. Referring back to FIG. 3, the distance L between central axis 67 of the oscillating laser beam 65 to the front tip of the electrode wire (as arc 43 forms between the weld puddle/part 78 and electrode wire 42) changes from about 0 mm to about 2 mm. Within this effective zone, the laser beam can manipulate the arc cathode position.

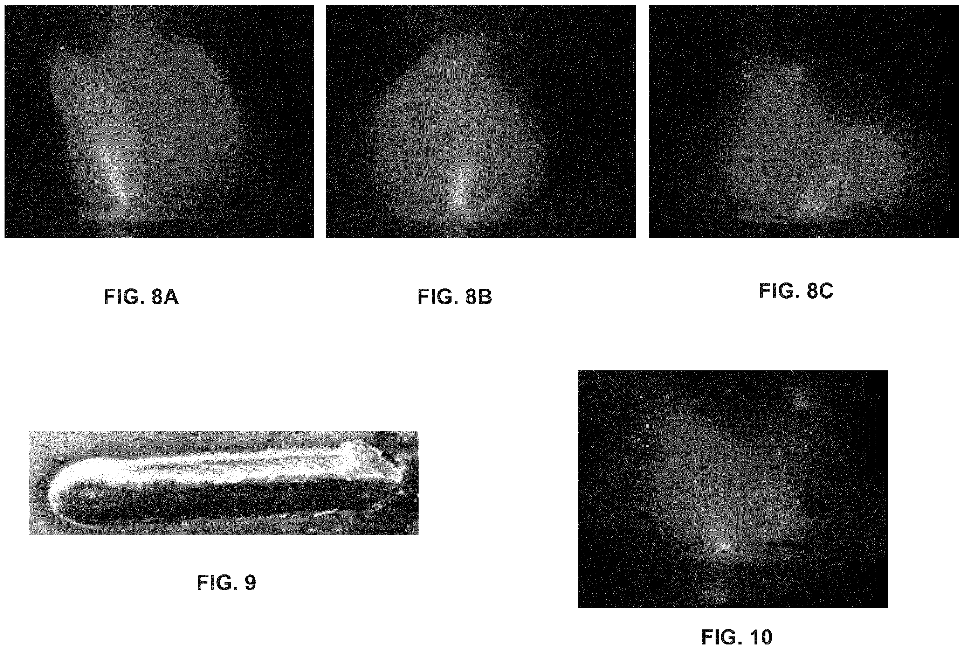

FIG. 8A through 8C show the arc cone as it follows the laser beam position from left to right. Therefore, the energy input is redistributed in the molten pool where the side is enhanced with more energy while the center line is input with less energy. The result is a weld bead with a flatter appearance and enhanced wetting toe angle, as shown in FIG. 9.

However, when the distance between the laser beam and the arc is too great (e.g., the distance L between the laser beam and the electrode wire is greater than a desired threshold distance, for example, about 2 mm), the cathode spot will separate from the laser irradiation spot, as shown in FIG. 10. Once the laser beam is too far away from the center of the molten pool, the distance becomes too great such that the additional arc column length required to reach the laser spot makes closer points around the edge of the molten puddle the preferred cathode attachment points. Thus, the cathode spot will move to various closer proximity points, resulting in a less stable, more volatile arc process.

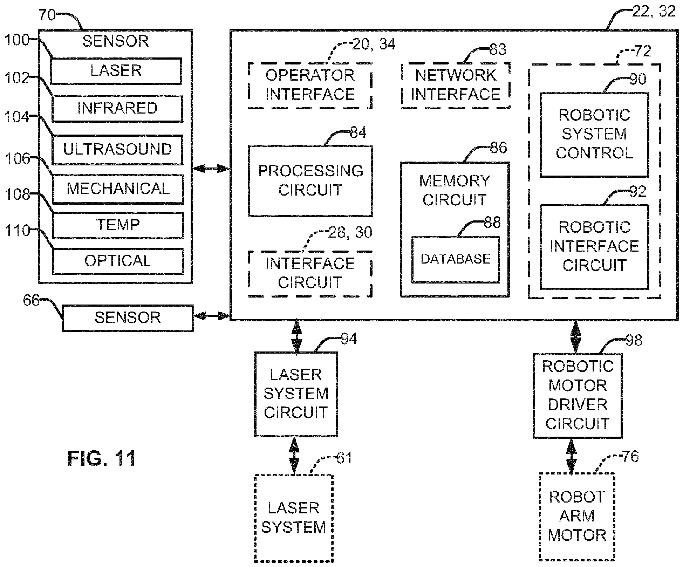

FIG. 11 illustrates example control circuit, such as one or both of control circuits 22, 32, configured to function in a system of the type illustrated in FIGS. 1-3, as disclosed herein. The overall circuitry may include the operator interfaces 20 and 34 and/or interface circuits 28 and 30. For example, the various interfaces can provide communication of operational parameters, including user input and networked information via network interface 83, as well as information from downstream components such as a wire feeder, a welding torch/tool, and various sensors and/or actuators.

The control circuit includes a processing circuit 84 which itself may include one or more application-specific or general purpose processors. The processing circuit 84 may be further configured to carry out welding sequences such as corresponding to formation of a particular additive manufacturing part. The processing circuit 84 can receive information regarding the part from a database 88 stored in a memory circuit 86, and/or receive the information from a networked computer and/or a user input. Based on the information, the processing circuit 84 can control and/or coordinate actions of the system components by making computations for implementation of an additive manufacturing process.

The various models and inputs can be correlated based on a number of variables of the additive manufacturing process. For example, geometric features of the three-dimensional model may correspond to a point in time and/or space associated with the process and/or part. For instance, a first or base layer of the part may correspond with an earlier time than a later applied layer. The thermal model may similarly correspond to the process timeline, as well as correspond to the feature of the three-dimensional model at that point in time. The welding sequence can also be synced to the models, to ensure that the welding operation is adjusted to correspond to the requirements of the models.

In an example, the thermal model may anticipate a temperature at a region of the part upon which a wire droplet is to be applied. Along with information regarding a geometric characteristic of the part associated with the region, the processing circuit 84 may adjust an operational characteristic of one or more components of the system (e.g., the power supply, the wire feeder, the robotic system, etc.) based on at least one of the temperature or the geometric characteristic. In this manner, the system controls formation and application of each droplet used to create the part, including location of the droplet, amount of power and/or heat associated with the application, speed and direction of the application tool (e.g., the torch 16), wire feed speed and/or direction, wherein the plurality of droplets is configured to build up the part.

In some examples, the sensor 70 includes a laser sensor 100 configured to scan the part periodically or continuously during the additive manufacturing process. This scan can be fed back to the processing circuit to compare with the three-dimensional model, to either ensure that the part being formed conforms to the three-dimensional model, and/or to identify variations. Based on the comparison, the processing circuit 84 can adjust one or more operational characteristics of the system to facilitate formation of the part.

Additionally or alternatively, sensor 70 may include an infrared sensor 102, an ultrasound sensor 104, a mechanical sensor 106, or a thermal sensor 108, an optical sensor 110, to name but a few. Similarly, sensor data from the various sensors can be fed back to the processing circuit 84 for analysis and control of operational characteristics.

By coordinating control of the various systems, control of part formation is enhanced, and may include finer detail with fewer negative effects associated with conventional metal deposition techniques. In conventional systems, for example those employing Titanium as stock material, high welding power is needed to form metal droplets to create a weld. The result is a high level of heat maintained at the deposition site, which can lead to sagging as well as imprecise placement of the advancing wire. Further, high power levels typically force relatively large amounts of metal to dislodge from the electrode as droplets. Thus, fine details are beyond the capabilities of conventional machines.

By contrast, the hybrid additive manufacturing system disclosed herein employs both laser systems and an arc welding processes to apply metal droplets to form a part. As a result, a greater range of materials is available to the additive manufacturing system employing (i.e. Titanium), as well as application of thinner, more detailed geometric features.

In some examples, robotic system 72, which may include a robotic system control 90 and/or robotic interface circuit 92, can be integrated with one or more components of the circuitry, such as control circuits 22, 32. In other examples, all or part of the robotic system 72 can be located remotely from one or both of the power supply or the wire feeder, and communicate via the robotic interface circuit 92 and one or more of the interface circuits 23, 34, 28, 30, 83.

The robotic system 72 is in communication with the processing circuit 84, as well as the plural interfaces and memory circuit 86. The robotic control system 90 is configured to control operation of the robotic arm 74 via control of a robotic motor drive circuit 98 which controls a robotic arm motor or actuator 76. In this way, the location and/or orientation of the tool 16 is controlled in coordination with data provided by sensors, models, inputs, etc. As a result, geometric features of the part are formed by control of multiple variables that contribute to creation of the part.

In some examples, a position and/or an orientation between the laser system and the arc welding tool is fixed. In other words, the controller(s) can command the laser system or the arc welding tool to maintain a predetermined or threshold distance or angle between them. In some examples, a mechanical or other physical structure is employed to maintain a fixed relationship between the laser system and the arc welding tool. The maintained distance and/or fixed relationship limits the number of process variables (e.g., to output power characteristics, wire feed speed, etc.) determined to achieve a desired weld.

Additionally or alternatively, one or more of the interfaces (e.g., interface circuits 28, 30; operator interfaces 20, 34) can provide information corresponding to operational parameters of the system. In this example, operational parameter information can be provided by one or more of the wire feeder motors, such as current draw, voltage, power, inductance, wire feed speed, wire feed acceleration, wire feeder motor angle, torque, position, etc., which can be analyzed by the processing circuit 84 to indirectly determine one or more operational characteristics. This process can be implemented in conjunction with the sensors 70 and/or 66 or without to achieve a similar result.

In some examples, the processing circuit 84 includes a timer, a speed sensor, or other sensor that may provide information regarding the additive manufacturing process, such as the amount of wire consumed, an estimate of the anticipated progress for the manufacturing process, etc. Additionally or alternatively, the control circuits 22, 32 can be configured to monitor and/or adjust a power output characteristic (e.g., current, voltage, power, phase, etc.) associated with the power supply.

Particular threshold amounts employed to make determinations for adjustment (e.g., associated with operating voltage, current, power, temperature, shape, speed, etc.), as well as the amount of change implemented in response to a determination by the control circuit, can be predetermined by a welding sequence particular to a welding operation, based on sensor data, trend data analyzed during the hybrid additive manufacturing operation, on networked information from similar welding systems, input by an operator, determined by algorithms to control the hybrid additive manufacturing process, etc., or any combination thereof.

The processing circuit 84 is further configured to control a laser system control circuit 94 and laser system 61 and laser generator 63. The processing circuit 84 provides control signals to the laser system control circuit to adjust in response to information corresponding to an amount of wire between the two wire feeder motors. In particular, the sensors 70 can monitor one or more characteristics of the laser system, the arc welding tool 16, the power supply output, and/or the part 78 (e.g., the weld puddle size, shape, temperature, location of the electrode wire and/or the cathode spot on the weld puddle, etc.), and provide data to the processing circuit 84 for analysis and determination.

The processing circuit 84 will also be associated with memory circuitry 86 which may consist of one or more types of permanent and temporary data storage, such as for providing the welding sequences implemented, storing the three-dimensional and thermal models, storing operational characteristics, storing weld settings, storing error logs, etc. The adjustment of the operational characteristics can be made by reference and/or comparison to historical data from preceding additive manufacturing operations, which can also be stored on memory circuit 86. For instance, adjustment may be made on the basis of stored data based on an historical analysis of a similar additive manufacturing operation. The historical data can correspond to, for example, operational parameters, other sensor data, a user input, as well as data related to trend analysis, threshold values, profiles associated with a particular mode of operation, etc., and can be stored in a comparison chart, list, library, etc., accessible to the processing circuit 84.

Although described with respect to certain arc welding techniques, a pulse waveform can be used, as well as constant voltage spray, pulse, and/or short circuit welding techniques. Additionally or alternatively, a geometric or other shape the laser beam traces on the weld puddle can differ, including but not limited to, circular, rectangular, etc.

Furthermore, the oscillation frequency of the laser beam works together (e.g., is synchronized or otherwise coordinated) with a pulse frequency of the laser beam and/or the wire droplet detachment frequency, to achieve the most stable process and desirable weld. In some examples, the pulse frequency of the laser beam and the wire droplet detachment frequency are additionally or alternatively synchronized or otherwise coordinated.

As disclosed herein, the hybrid additive manufacturing system provides significant advantages over conventional technologies. For example, through the hybrid additive manufacturing systems and methods described herein, relatively high deposition rates and welding speeds are provided. Further, less spatter and straighter beads are formed, despite the increase deposition rates. The arc is more stable versus conventional arc welding systems. As the power required to perform the hybrid additive manufacturing process is lower, heat input is less than traditional arc welding processes. The result is a weld with minimal distortion, a smaller heat affected zone, which provides the enhanced bead appearance and deposition characteristics. Additionally, the resulting enhanced system is useful for vertical part/wall formation in additive manufacturing practices.

The present methods and systems may be realized in hardware, software, and/or a combination of hardware and software. Example implementations include an application specific integrated circuit and/or a programmable control circuit.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

While the present method and/or system has been described with reference to certain implementations, it will be understood by those skilled in the art that various changes may be made and equivalents may be substituted without departing from the scope of the present system as defined in the appended claims.

## Claims

1. A hybrid additive manufacturing system, comprising:
an arc welding tool (16) configured to receive a wire electrode (42) and to apply a plurality of droplets of the wire electrode (42) to a part (78) comprising a plurality of layers, each layer comprising one or more droplets to build up the part (78);
a laser system (61) comprising means (22) to:
generate a laser beam (65);
the system being further **characterised by**:
the laser system (61) comprising:
means to control a lens to focus the laser beam (65) on a focal point over a substrate (18) during a hybrid additive manufacturing operation or welding operation to stabilize an arc from the arc welding tool (16) at the weld puddle; and by:
a controller (22, 32, 72) configured to:
regulate power to at least one of the arc welding tool (16) or the laser system (61); and
command an adjustment of one of a position or orientation of one or more of the laser system (61) or the arc welding tool (16) to maintain a threshold distance between the focal point and the wire electrode (42) at the weld puddle, or to move the laser beam at an oscillation frequency such that the distance between the focal point and the wire electrode (42) at the weld puddle oscillates.

2. The hybrid additive manufacturing system as defined in claim 1, wherein a material of the wire electrode (42) comprises one or more of Titanium, copper, magnesium, or an alloy of one or more of the materials.

3. The hybrid additive manufacturing system as defined in claim 1, wherein the focal point corresponds to a laser irradiation spot to lock the cathode position in the weld bead, thereby stabilizing the arc.

4. The hybrid additive manufacturing system as defined in claim 1, wherein the threshold distance between the focal point and the wire electrode (42) is between 1 and 3 mm.

5. The hybrid additive manufacturing system as defined in claim 1, wherein the laser beam (65) is generated with a lasing power of less than 1000 Watts.

6. The hybrid additive manufacturing system as defined in claim 1, wherein the laser system (61) is controlled to adjust at least one of a lasing power level or an oscillation speed of the laser system (61).

7. The hybrid additive manufacturing system as defined in claim 1, wherein the laser system (61) further comprises a lens to focus the laser beam (65) to a focal point on a weld puddle to generate heat to facilitate melting of the wire electrode (42) as it enters the weld puddle.

8. The hybrid additive manufacturing system as defined in claim 1, wherein the controller (22, 32, 72) is further configured to adjust a location of the focal point based on a determined distance from a reference point or feedback data indicating a position of the wire electrode (42) relative to the focal point on the welding puddle.

9. The hybrid additive manufacturing system as defined in claim 1, wherein the laser system (61) is configured to scan the laser beam (65) about the focal point as a hollow shaped beam or in a continuous pattern.

10. The hybrid additive manufacturing as defined in claim 1, further comprising adjusting at least one of a lasing power level, a spot size of the lasing power, or a shape of the laser beam (65) to adjust a power profile of the laser power at the focal point.

11. The hybrid additive manufacturing system of claim 1, further comprising a sensor (70) including one or more of an optical sensor, a laser scanner, an infrared sensor, an ultrasound sensor, a mechanical sensor, or a thermal sensor to collect information from one or more characteristics of the laser system (61) or the arc welding tool (16).

12. The hybrid additive manufacturing system as defined in claim 1, wherein the movement of the focal point and relative movement between the weld puddle and the laser system (61) cause the laser beam (65) to trace a superimposed pattern on the weld puddle, and wherein the superimposed pattern is one of a circle, an ellipse, a zigzag, a figure-8, a crescent, a triangle, a square, a rectangle, a non-linear pattern, an asymmetrical pattern, a pause, or any combination thereof.

13. The hybrid additive manufacturing system as defined in claim 1, further comprising a wire feeder (12) configured to move the wire (42) to or away from the weld puddle.

14. The hybrid additive manufacturing system as defined in claim 1, wherein the arc welding process comprises one of gas metal arc welding, GMAW, gas tungsten arc welding, GTAW, pulsed-GMAW, P-GMAW, or plasma arc welding, PAW.

15. The hybrid additive manufacturing system as defined in claim 1, wherein:
the plurality of droplets applied by the arc welding tool (16) form a weld bead to create the part (78).

16. The hybrid additive manufacturing system of claim 17, wherein the position or orientation of one or more of the laser system (61) or the arc welding tool (16) are controlled to control an arc cathode position in the weld bead.

17. The hybrid additive manufacturing as defined in claim 15, wherein the controller (22, 32, 72) is configured to adjust at least one of a lasing power level, a spot size of the lasing power, or a shape of the laser beam (65) to adjust a power profile of the laser power at the focal point.

18. The hybrid additive manufacturing system of claim 15, further comprising a sensor (70)_to collect information from one or more characteristics of the laser system (61) or the arc welding tool (16), wherein the sensor (70) includes one or more of an optical sensor, a laser scanner, an infrared sensor, an ultrasound sensor, a mechanical sensor, or a thermal sensor.

## Patentansprüche

1. Hybrides additives Fertigungssystem, aufweisend:
ein Lichtbogenschweißwerkzeug (16), das zur Aufnahme einer Drahtelektrode (42) ausgestaltet ist und eine Vielzahl von Tröpfchen der Drahtelektrode (42) auf ein Teil (78) aufbringt, das eine Vielzahl von Schichten aufweist, wobei jede Schicht ein oder mehrere Tröpfchen zum Aufbau des Teils (78) aufweist;
ein Lasersystem (61), aufweisend Mittel (22) zum:
Erzeugen eines Laserstrahls (65);
wobei das System ferner **gekennzeichnet ist durch**:
das Lasersystem (61), aufweisend:
Mittel zur Steuerung einer Linse zur Fokussierung des Laserstrahls (65) auf einen Brennpunkt über einem Substrat (18) während eines hybriden additiven Fertigungsvorgangs oder eines Schweißvorgangs zur Stabilisierung eines Lichtbogens aus dem Lichtbogenschweißwerkzeug (16) am Krater; und **durch**:
eine Steuerung (22, 32, 72), ausgestaltet zum:
Regeln der Leistung an zumindest einem von dem Lichtbogenschweißwerkzeug (16) oder dem Lasersystem (61); und Befehlen einer Anpassung entweder einer Position oder Ausrichtung eines oder mehrerer von dem Lasersystem (61) oder dem Lichtbogenschweißwerkzeug (16) zur Beibehaltung eines Schwellenabstands zwischen dem Brennpunkt und der Drahtelektrode (42) an dem Krater oder zum Bewegen des Laserstrahls mit einer Schwingungsfrequenz, sodass der Abstand zwischen dem Brennpunkt und der Drahtelektrode (42) an dem Krater schwingt.

2. Hybrides additives Fertigungssystem nach Anspruch 1, wobei das Material der Drahtelektrode (42) eines oder mehrere von Titan, Kupfer, Magnesium oder eine Legierung aus einem oder mehreren der Materialien aufweist.

3. Hybrides additives Fertigungssystem nach Anspruch 1, wobei der Brennpunkt einem Laserbestrahlungspunkt entspricht, um die Kathodenposition in der Schweißraupe zu fixieren und dadurch den Lichtbogen zu stabilisieren.

4. Hybrides additives Fertigungssystem nach Anspruch 1, wobei der Schwellenabstand zwischen dem Brennpunkt und der Drahtelektrode (42) zwischen 1 und 3 mm beträgt.

5. Hybrides additives Fertigungssystem nach Anspruch 1, wobei der Laserstrahl (65) mit einer Laserleistung von weniger als 1000 Watt erzeugt wird.

6. Hybrides additives Fertigungssystem nach Anspruch 1, wobei das Lasersystem (61) zur Anpassung von zumindest entweder einer Laserleistungsstufe oder einer Oszillationsgeschwindigkeit des Lasersystems (61) gesteuert wird.

7. Hybrides additives Fertigungssystem nach Anspruch 1, wobei das Lasersystem (61) ferner eine zum Fokussieren des Laserstrahls (65) auf einen Brennpunkt in einem Krater geeignete Linse zur Erzeugung von Wärme aufweist, um das Schmelzen der Drahtelektrode (42) beim Eintritt in den Krater zu erleichtern.

8. Hybrides additives Fertigungssystem nach Anspruch 1, wobei die Steuerung (22, 32, 72) ferner zur Anpassung einer Position des Brennpunkts basierend auf einem bestimmten Abstand von einem Referenzpunkt oder auf Rückkopplungsdaten, die eine Position der Drahtelektrode (42) relativ zum Brennpunkt im Krater anzeigen, ausgestaltet ist.

9. Hybrides additives Fertigungssystem nach Anspruch 1, wobei das Lasersystem (61) zum Scannen des Laserstrahls (65) um den Brennpunkt als hohlförmiger Strahl oder in einem kontinuierlichen Muster ausgestaltet ist.

10. Hybride additive Fertigung nach Anspruch 1, ferner aufweisend das Anpassen zumindest einer Laserleistungsstufe, einer Punktgröße der Laserleistung oder einer Form des Laserstrahls (65), um ein Leistungsprofil der Laserleistung am Brennpunkt anzupassen.

11. Hybrides additives Fertigungssystem nach Anspruch 1, ferner aufweisend einen Sensor (70) einschließlich eines oder mehrerer optischer Sensoren, Laserscanner, Infrarotsensoren, Ultraschallsensoren, mechanischer Sensoren oder thermischer Sensoren zur Erfassung von Informationen über eine oder mehrere Eigenschaften des Lasersystems (61) oder des Lichtbogenschweißwerkzeugs (16).

12. Hybrides additives Fertigungssystem nach Anspruch 1, wobei die Bewegung des Brennpunkts und die Relativbewegung zwischen dem Krater und dem Lasersystem (61) bewirken, dass der Laserstrahl (65) ein überlagertes Muster auf dem Krater nachzeichnet, und wobei das überlagerte Muster eines von einem Kreis, einer Ellipse, einem Zickzack, einer "Figur 8", einem Halbmond, einem Dreieck, einem Quadrat, einem Rechteck, einem nichtlinearen Muster, einem asymmetrischen Muster, einer Unterbrechung oder einer Kombination davon ist.

13. Hybrides additives Fertigungssystem nach Anspruch 1, ferner aufweisend einen Drahtvorschub (12), der zum Bewegen des Drahtes (42) zum Krater oder von diesem weg ausgestaltet ist.

14. Hybrides additives Fertigungssystem nach Anspruch 1, wobei der Lichtbogenschweißprozess eines von Gas-Metall-Lichtbogenschweißen, GMAW, Gas-Wolfram-Lichtbogenschweißen, GTAW, gepulstem GMAW, P-GMAW, oder Plasma-Lichtbogenschweißen, PAW, aufweist.

15. Hybrides additives Herstellungssystem nach Anspruch 1, wobei:
die Vielzahl der von dem durch das Lichtbogenschweißwerkzeug (16) aufgebrachten Tröpfchen eine Schweißraupe bilden, um das Teil (78) zu erzeugen.

16. Hybrides additives Fertigungssystem nach Anspruch 17, wobei die Position oder Ausrichtung des Lasersystems (61) oder des Lichtbogenschweißwerkzeugs (16) zur Steuerung einer Position der Lichtbogenkathode in der Schweißraupe gesteuert wird.

17. Hybride additive Fertigung nach Anspruch 15, wobei die Steuerung (22, 32, 72) zur Anpassung zumindest einer Laserleistungsstufe, einer Punktgröße der Laserleistung oder einer Form des Laserstrahls (65) ausgestaltet ist, um ein Leistungsprofil der Laserleistung am Brennpunkt anzupassen.

18. Hybrides additives Fertigungssystem nach Anspruch 15, ferner aufweisend einen Sensor (70) zur Erfassung von Informationen aus einer oder mehreren Eigenschaften des Lasersystems (61) oder des Lichtbogenschweißwerkzeugs (16), wobei der Sensor (70) einen oder mehrere optische Sensoren, Laserscanner, Infrarotsensoren, Ultraschallsensoren, mechanische Sensoren oder thermische Sensoren beinhaltet.

## Revendications

1. Système de fabrication additive hybride, comprenant :
un outil de soudage à l'arc (16) configuré pour recevoir un fil-électrode (42) et pour appliquer une pluralité de gouttelettes du fil-électrode (42) à une partie (78) comprenant une pluralité de couches, chaque couche comprenant une ou plusieurs gouttelettes pour construire la partie (78) ;
un système laser (61) comprenant des moyens (22) pour :
générer un faisceau laser (65) ;
le système étant en outre **caractérisé par** :
le système laser (61) comprenant :
des moyens pour commander une lentille pour focaliser le faisceau laser (65) sur un point focal sur un substrat (18) durant une opération de fabrication additive hybride ou une opération de soudage pour stabiliser un arc provenant de l'outil de soudage à l'arc (16) au niveau du bain de fusion ; et par :
un dispositif de commande (22, 32, 72) configuré pour :
réguler la puissance vers au moins un parmi l'outil de soudage à l'arc (16) ou le système laser (61) ; et
commander un ajustement d'une parmi une position ou une orientation d'un ou plusieurs parmi le système laser (61) ou l'outil de soudage à l'arc (16) pour maintenir une distance seuil entre le point focal et le fil-électrode (42) sur le bain de fusion, ou pour déplacer le faisceau laser à une fréquence d'oscillation telle que la distance entre le point focal et le fil-électrode (42) sur le bain de fusion oscille.

2. Système hybride de fabrication additive selon la revendication 1, dans lequel le matériau du fil-électrode (42) comprend un ou plusieurs parmi le titane, le cuivre, le magnésium, ou un alliage d'un ou plusieurs parmi les matériaux.

3. Système hybride de fabrication additive selon la revendication 1, dans lequel le point focal correspond à un point d'irradiation laser pour verrouiller la position de la cathode dans le cordon de soudure, stabilisant ainsi l'arc.

4. Système hybride de fabrication additive selon la revendication 1, dans lequel la distance seuil entre le point focal et le fil-électrode (42) est comprise entre 1 et 3 mm.

5. Système hybride de fabrication additive selon la revendication 1, dans lequel le faisceau laser (65) est généré avec une puissance laser inférieure à 1000 Watts.

6. Système hybride de fabrication additive selon la revendication 1, dans lequel le système laser (61) est commandé pour ajuster au moins un parmi un niveau de puissance laser ou une vitesse d'oscillation du système laser (61).

7. Système hybride de fabrication additive selon la revendication 1, dans lequel le système laser (61) comprend en outre une lentille pour focaliser le faisceau laser (65) à un point focal sur un bain de fusion pour générer de la chaleur afin de faciliter la fusion du fil-électrode (42) lorsqu'il entre dans le bain de fusion.

8. Système hybride de fabrication additive selon la revendication 1, dans lequel le dispositif de commande (22, 32, 72) est en outre configuré pour ajuster un emplacement du point focal sur base d'une distance déterminée à partir d'un point de référence ou de données de rétroaction indiquant une position du fil-électrode (42) par rapport au point focal sur le bain de fusion.

9. Système hybride de fabrication additive selon la revendication 1, dans lequel le système laser (61) est configuré pour balayer le faisceau laser (65) autour du point focal sous la forme d'un faisceau de forme creuse ou selon un motif continu.

10. Fabrication additive hybride selon la revendication 1, comprenant en outre l'ajustement d'au moins un élément parmi un niveau de puissance de laser, une taille de point de la puissance de laser, ou une forme du faisceau laser (65) pour ajuster un profil de puissance de la puissance laser au point focal.

11. Système hybride de fabrication additive selon la revendication 1, comprenant en outre un capteur (70) comprenant un ou plusieurs parmi un capteur optique, un scanner laser, un capteur infrarouge, un capteur à ultrasons, un capteur mécanique ou un capteur thermique pour collecter des informations provenant d'une ou plusieurs caractéristiques du système laser (61) ou de l'outil de soudage à l'arc (16).

12. Système hybride de fabrication additive selon la revendication 1, dans lequel le mouvement du point focal et le mouvement relatif entre le bain de fusion et le système laser (61) amènent le faisceau laser (65) à tracer un motif superposé sur le bain de fusion, et dans lequel le motif superposé est l'un parmi un cercle, une ellipse, un zigzag, une figure en 8, un croissant, un triangle, un carré, un rectangle, un motif non linéaire, un motif asymétrique, une pause, ou une quelconque combinaison de ceux-ci.

13. Système hybride de fabrication additive selon la revendication 1, comprenant en outre un dispositif d'alimentation en fil (12) configuré pour déplacer le fil (42) vers ou à l'écart du bain de fusion.

14. Système hybride de fabrication additive selon la revendication 1, dans lequel le processus de soudage à l'arc comprend un parmi un soudage à l'arc sous gaz métallique, GMAW, un soudage à l'arc sous gaz tungstène, GTAW, un soudage à l'arc pulsé-GMAW, ou sous plasma, PAW.

15. Système hybride de fabrication additive selon la revendication 1, dans lequel :
la pluralité de gouttelettes appliquées par l'outil de soudage à l'arc (16) forme un cordon de soudure pour créer la partie (78) .

16. Le système hybride de fabrication additive selon la revendication 17, dans lequel la position ou l'orientation d'un ou plusieurs parmi le système laser (61) et l'outil de soudage à l'arc (16) sont commandées pour commander une position de cathode à arc dans le cordon de soudure.

17. Fabrication additive hybride selon la revendication 15, dans laquelle le dispositif de commande (22, 32, 72) est configuré pour ajuster au moins un élément parmi un niveau de puissance de laser, une taille de point de la puissance de laser, ou une forme du faisceau laser (65) pour ajuster un profil de puissance de la puissance laser au point focal.

18. Système hybride de fabrication additive selon la revendication 15, comprenant en outre un capteur (70) pour collecter des informations à partir d'une ou plusieurs caractéristiques du système laser (61) ou de l'outil de soudage à l'arc (16), dans lequel le capteur (70) comprend un ou plusieurs parmi un capteur optique, un scanner laser, un capteur infrarouge, un capteur à ultrasons, un capteur mécanique, ou un capteur thermique.
